# EUROPEAN PATENT APPLICATION

(11) **EP 3 367 306 A1**
(43) Date of publication of application: **29.08.2018**
(21) Application number: 16795449.4
(22) Date of filing: 18.10.2016
(51) Int. Cl.: G06K 9/20, G06K 9/34

(54) **PACKAGING RECOGNISABLE ON THE BASIS OF SYMBOLS, SYSTEM AND METHOD FOR PREPARING EDIBLE PRODUCTS ON THE BASIS OF SAID RECOGNISABLE PACKAGING**

(30) Priority: 25.10.2015 PT 2015108911
(71) Applicant: ALVA ALTA, LDA, 1990-237 Lisboa (PT)
(72) Inventor: DE JESUS PIEDADE, Fernando Manuel, 1000-138 Lisboa (PT); RODRIGUES CHAVES FERREIRA, Paulo Alexandre, 1000-138 Lisboa (PT); TEIXEIRA E SILVA CARDOSO, Paulo Alexandre, 1990-237 Lisboa (PT)
(74) Representative: Liebl, Thomas
(86) International application number: PCT/PT2016/000012
(87) International publication number: WO 2017/074208

(57) **Abstract**

The present invention refers to a package (1) configured for collecting an edible substance and adapted for preparing a respective edible product, such as for example a beverage, comprising at least one exterior surface (2) presenting non-concentric symbols (3), whereby at least two of said symbols (31, 32) present a different distance to the surface perimeter and differ in at least one image parameter and/or in at least one dimensional parameter associated with a geometric form defined by the distribution of at least part of said symbols (3), preferentially also respective incremental variations, so that can be recognized by automatic image processing means.

The present invention further refers to a system for distribution of edible products that comprises at least two types of recognizable single portion packages (1, 1') and at least one type of machine (1) adapted for preparing edible products based upon said types of single portion packages (1, 1'), as well as further refers to a process of distribution of edible products based upon said recognizable packages (1, 1').

## Description

### Field of the invention

The present invention refers to optically recognizable packages configured so as to collect edible substances and adapted for preparation of edible products, such as for example capsules, pods or sachets for preparing beverages.

The present invention further refers to a system comprising at least two types of optically recognizable packages, and at least one type of machine adapted for preparing at least one edible product based upon at least one of said types of packages, and to a process of preparing edible products based upon said optically recognizable packages.

### Background of the invention

The prior art includes different solutions of single portion packages, provided for example in the form of pods or capsules, adapted for the preparation of beverages in respective machines, including by means of extracting an aromatic substance, such as for example espresso type coffee and other types of beverages. A particularly relevant aspect is the possibility of a coffee machine to recognize a given type of capsule, notably so as to adjust the operation parameters, such as for example fluid injection temperature and pressure, according to the ingredients contained in said type of capsule.

The prior art includes several approaches, including the use of optical recognition adapted so as to recognize a symbol associated with a respective capsule. However, most of the solutions refers to the recognition of a so-called bi-dimensional code ("2D code recognition"), such as a bar code or similar, for example by means of a laser device. The use of an image comprising several optic parameters presents several advantages relative to the use of an RFID tag. Moreover, the costs associated with respective recognition means are relatively high. Examples of this type of solution are disclosed in documents WO 02/28241 A1, EP 1440640 B1, EP 1786303 B1.

Another approach proposes the optical recognition of different colour zones. Examples are discloses in documents EP 2266446 A1 and EP 2227120 B1.

In the case of optic recognition of an image including symbols ("optical character recognition") it is necessary the use of camera-like recognition means, whereby the technical characteristics of these means can substantially increase the costs as a function of the requirements associated with certain technical parameters.

Another particularly relevant aspect is the disposition of optic recognition means inside of a beverage preparation machine, in particular inside of an extraction device adapted for extraction of an edible substance contained inside of a capsule. In fact, in the case of image recognition cameras the exiguity of space often constrains the observation direction.

The prior art includes several solutions that disclose a placement of the recognition means in an extraction device so as to correspond to a peripheral zone of a top side of a package (e.g., WO 02/28241 A1), a side wall zone (e.g., WO 2012/010317 A1) and to both top side and side wall (e.g., EP 2227120 B1). However, the disposition of recognition means in a peripheral zone presents several construction constrains, including in terms of sealing of said recognition means inside of a respective extraction device.

Moreover, in the case of a single portion package of circular cross-section and adapted for use in a coffee machine or similar, a user may insert said package in an angular position that does not correspond to the observation direction by the recognition device, thereby constraining a respective operation.

One type of solution for this problem is to disposed the symbol at the centre of the reading surface, or a repetition of a given code sequence along an angular direction angular. Examples are disclosed documents WO 2011/089048 A1, WO 2011/141532 A1 and WO 2011/141535 A1.

Document EP 1379153 B1 discloses a capsule that presents a bar code disposed in concentric manner in an intercalary zone of an exit or entry side of a single portion package. This solution proposes the use of a laser device for recognition of a bar code.

There is therefore the need to provide systems for preparing edible products that, alternatively to the known codes, such as bar code and similar, provide a more reliable recognition, friendlier to users of respective recognizable packages, and with less processing requirements.

### General description of the invention

The objective of the present invention is to provide a package adapted so that can be optically recognized by automatic image processing means that are simpler and more reliable, and that provides a means of communication with consumers, preferentially including such that they can be at least partially interpreted by consumers. Moreover, such recognizable package should also provide a code that can be processed by automatic image processing means in a simple and reliable manner and with less image processing requirements, adapted so as to provide a plurality of information variables, preferentially so that can also be interpreted by consumers.

The aforementioned objective is solved according to the present invention by means of a package according to claim 1.

In particular, the aforementioned objective is solved by means of a package that comprises at least an exterior surface presenting at least two, preferentially at least three symbols provided non-concentric, whereby at least two of said symbols are disposed at a different distance from at least one of a surface centre and perimeter, and at least two symbols present at least one different of at least one of:
- an image parameter associated with said symbols, and
- a dimensional parameter associated with the at least one geometric form of configuration defined by the distribution of said symbols, in particular the vertices of said geometric form being defined said symbols.

The captured image includes at least one image parameter in at least one of visible, infrared and ultraviolet ranges, whereby said symbols are optically recognizable by at least one, preferentially at least two image parameters within at least one said optical ranges, in relation to a respective background surface, preferentially also in relation to a surface perimeter of said external surface.

It is preferred when at least part of said symbols are provided so that they are optically recognizable in different of said optic ranges.

It is preferred when at least most of said symbols present a similar shape.

It is preferred when at least most of said symbols correspond to one of alphanumeric symbols and regular geometric shapes.

It is preferred when at least part of said symbols are provided in a non-clustered arrangement, whereby at least one of said visible symbols presents a distance to a neighbouring visible symbol, that is greater than, preferentially twice as great as, the greater extension of the smallest of said symbols.

It is preferred when at least part of said symbols are distributed at the vertices of at least one of regular and irregular, preferentially polygonal-like, configuration.

Is is preferred when said symbols are arranged in a mesh-like distribution and only part of said symbols is provided visible.

Is is preferred when there are provided at least two, preferentially at least three visible symbols, and up to ten, preferentially up to fifteen visible symbols, and the other symbols are preferentially provided invisible.

It is preferred when said exterior surface presents a circular form, and corresponds to a top part of the package adapted for injection of a pressurized fluid flow, or presents a polygonal form, whereby at least one, preferentially at least most part of said symbols are provided on at least one of a central zone and an intercalary zone of said exterior surface.

It is preferred when said package comprises at least one constructive element confining an interior space, whereby said exterior surface is provided by at least one of a constructive element, for example of the type package wall, a surface element, for example of the label type, or other element directly or indirectly associated with said package, such as for example a tag, or corresponds to a second package configured for storing a plurality of single portion packages.

Said package is preferentially configured so as to collect an single portion of edible substance, and adapted so that can be used in the preparation of edible products, such as for example beverages, including aromatic beverages such as for example espresso type coffee, tea and similar, including in the form of sachets, pods, rigid or flexible capsules, both by means of introducing said package or the contents thereof into a machine or recipient for preparing edible products, as well as by means of direct ingestion of the edible substance by consumers.

Another objective of the present invention is to provide a system of distribution of edible products that comprises at least two types of packages of similar form and dimension, containing edible substances that differ in a respective composition or other product parameter, whereby said system provides the recognition of each type of package based on the image of at least two symbols, provided by at least one of said exterior surfaces, in a more reliable and efficient manner by automatic image processing means, and preferentially also at least partially by human means.

The aforementioned objective is solved according to the present invention by means of a system according to claim 13.

Said system preferentially comprises at least two types of packages presenting respective flow entry and exit dispositions provided in opposing tops, and at least one type of machine for preparing edible products, such as for example beverages, comprising at least one collection device adapted for collecting at least one of said types of packages or portion of edible substance initially contained in one of said types of packages, and for injecting a fluid and discharging an edible product.

It is preferred when at least one of said symbols presents at least one of similar relative position and similar relative orientation in the exterior surfaces of said at least two types of surfaces, and at least one of said symbols presents at least one of different relative position and relative orientation, including at least one of different distance to the surface perimeter and different angular distance to a neighbouring symbol, in the exterior surfaces of said at least two types of packages.

It is preferred when the system further includes at least one of:
- at least one type of machine for preparing edible products and that comprises at least one type of collection device provided so that can collect a portion of edible substance, or a respective package, and discharge a resulting edible product,
- at least one type of communications device, such as for example a mobile phone, in particular a communication device provided so that can communicate with a control device of at least one type of machine,
whereby at least one of said types of machines and communications device comprise an image capture device, a processing device provided so that can operate image processing software, adapted so that provide the apprehension of at least one image parameter associated with said symbols that to the distribution of said symbols in an exterior surface of said types of packages.

It is preferred when said image capture device is provided in at least one of:
- an interior part of said machine, preferentially associated with said collection device,
- an exterior part of said machine, e
- an exterior part of said communications device, whereby said image capture device comprises an optic sensor, preferentially a camera, preferentially a digital camera, preferentially also a lens and further, preferentially a lighting device adapted so as to provide at least a previously defined lighting level of said exterior surface, including as a function of a respective ambient lighting level.

Another objective of the present invention is to disclose a process of preparation of an edible product that provide a reliable recognition of different types of packages.

The aforementioned objective is solved according to the present invention means of a process according to claim 14.

It is preferred when the process includes a step of analysis of the captured image, and said analysis includes comparing at least one, preferentially at least two image parameters associated with said symbols, with a respective comparative reference, whereby said comparative reference includes at least one of:
- an image parameter associated with said symbols;
- a dimensional parameter and respective variation of incremental type associated to the geometric form configured by the distribution of symbols at respective vertices thereof;
- at least one, optionally a plurality of previously defined images and associated with at least one exterior surface of said types of packages of single portion packages;
whereby said comparative references are previously registered, preferentially on said image processing device, or provided via communication means with other data means.

It is preferred when the process further includes the step of associating the result of said analysis of the captured image with at least one of:
- a product information parameter associated with a respective type of single portion package;
- a previously defined set of operation parameters of a machine (adapted for operation with said single portion package);
- an alphanumeric symbol corresponding to a given increment of dimensional variation relative to a previously defined reference;
- at least one expression, symbol or image recognizable by human means, whereby said expression is presented to a user of said machine by means of a display provided in the machine or in said communications device, such as for example a mobile phone or similar.

It is preferred when the process further includes the step of recording the result of analysis of the captured imaged in data means provided on said machine so that can be communicated to remote data means.

It is further preferred when said image capture by said image capture device is carried out before or after closure of said package collection device, and before supplying fluid to said single portion package.

It is further preferred when the process is part of at least one of:
- an information process about characteristics of an edible substance provided on a single portion package and/or respective edible product;
- a process of preparing an edible product, such as for example an aromatic beverage, by means of a single portion package of the pad, capsule, or similar type.

### Description of the figures

The present invention shall hereinafter be explained in greater detail based upon preferred embodiments and the attached Figures.

The Figures show, in simplified schematic representations:
- Figure 1:: side view (on the left side) and top view (on the right side) of a first embodiment of a package (1) according to the present invention;
- Figure 2:: side view (on the left side) and top view (on the right side) of a second embodiment of a package (1') according to the present invention;
- Figure 3:: side view (on the left side) and top view (on the right side) of a third embodiment of a package (1) according to the present invention;
- Figure 4:: side view (on the left side) and top view (on the right side) of a fourth embodiment of a package (1') according to the present invention;
- Figure 5:: top views of the exterior surface of two types of package (1, 1') in a first embodiment of a system of edible products according to the present invention;
- Figure 6:: top views of the exterior surface of two types of package (1, 1') in a second embodiment of a system of edible products according to the present invention;
- Figure 7:: top views of the exterior surface of two types of package (1, 1') in a third embodiment of a system of edible products according to the present invention;
- Figure 8:: top views of the exterior surface of two types of package (1, 1') in a fourth embodiment of a system of edible products according to the present invention;
- Figure 9:: top views of the exterior surface of two types of package (1, 1') in a fifth embodiment of a system of edible products according to the present invention;
- Figure 10:: top views of the exterior surface of two types of package (1, 1') in a sixth embodiment of a system of edible products according to the present invention;
- Figure 11:: side view of a first embodiment of a system of edible products according to the invention, including a machine (10) for preparing edible products;
- Figure 12:: side view of a second embodiment of a system of edible products according to the invention, including a machine (10) for preparing edible products.

### Detailed description of preferred embodiments of the invention

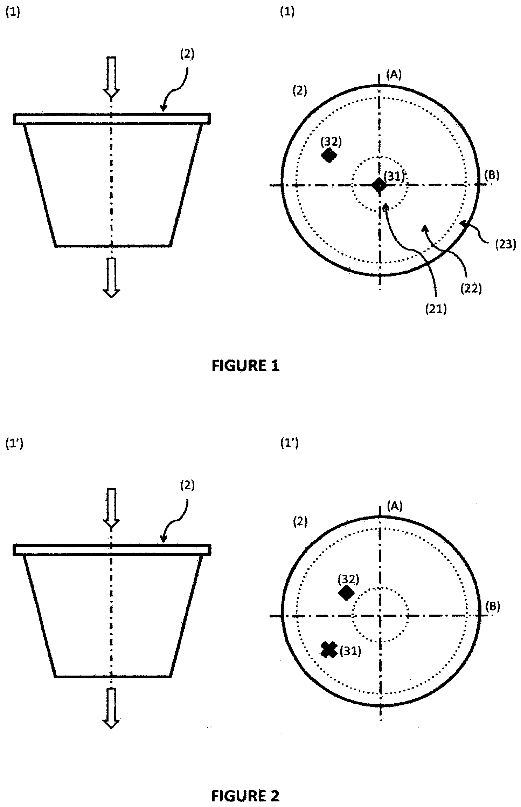

**Figure 1** presents a side view (on the left side) and top view (on the right side) of a first embodiment of a package (1) according to the present invention. In this case, it is a package (1) adapted for containing a single portion of an edible substance and for use in a beverage preparation machine, such as for example coffee, tea and similar.

Said package (1) presents an exterior surface (2), preferentially in a top part adapted for injection of a pressurized fluid flow, that presents a first symbols (31) and a second symbol (32), non-concentric, in this case with similar forms and colours.

According to a first inventive aspect, said symbols (3) present different distances to the surface perimeter, whereby said symbols (3) are provided so that can be individually recognized, preferentially also the image provided by at least part of said exterior surface (2), by automatic image processing means.

The recognition of the individual image of symbols (31, 32) provides information associated with the number of symbols, respective geometric form, colour, dimension and distance of each symbol (31, 32) to the surface perimeter of said exterior surface (2), whereby this information can be related with different parameters associated with product information of said package (1).

According to a preferred embodiment, said symbols (3) present a greater extension with a dimension bigger than 2 mm and are distributed at a bigger distance in between, preferentially bigger than twice a respective biggest dimension. It is this ways provided an easily recognizable code that is more reliable, and more resistant to the wear resulting from handling and extended storage.

**Figure 2** presents a second embodiment of a package (1)' according to the present invention in similar views to those of Figure 1, whereby the package (1') represented in Figure 2 presents similar form and dimensions as the package (1) represented in Figure 1.

As represented, the exterior surface (2) in this case presents to symbols (31, 32) that besides of a different distance to the surface perimeter of the exterior surface (2), also present different geometric forms and different relative positions, thereby configuring a different distribution on said exterior surface (2) relative to symbols (31, 32) provided in the package (1) represented in Figure 1.

According to a preferred embodiment, each one of said symbols (3) is provided in different reference observation quadrants (A, B) by an image capture device (31), so that there is required a smaller image resolution and smaller processing capacity for recognition of said symbols (3).

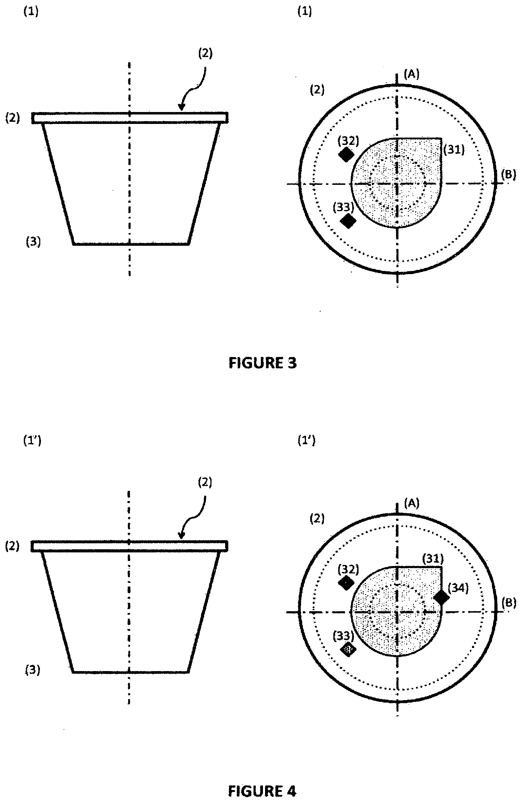

**Figure 3** represents a third embodiment of a package (1) according to the present invention.

As represented, the exterior surface (2) in this case presents a first symbols (31) that corresponds to a glyph or to a letter, or to a characteristic brand of logotype type, as well as a second (32) and third symbols (33) that present a simple geometric form.

**Figure 4** represents a fourth embodiment of a package (1) according to the present invention.

As represented, the exterior surface (2) in this case further presents a fourth symbols (34) provided on a perimeter region of said first symbols (31).

In fact, according to another preferred embodiment, at least one of said symbols (34) is provided at least partially inside another symbols (31) or corresponds to a dot-like variation of the perimeter of another symbols (31), so that there are provided more options of codification of information through the disposition of simple symbols (3), of easy recognition by human means and by automatic image processing means.

The other two symbols (32, 33) can in this case provide references of relative position, including of the relative angular position, that is, of the rotation of the image provided by said exterior surface (2) relative to a reference position, so that simplifies the process of recognition of symbols (31) and (34) by automatic image processing means.

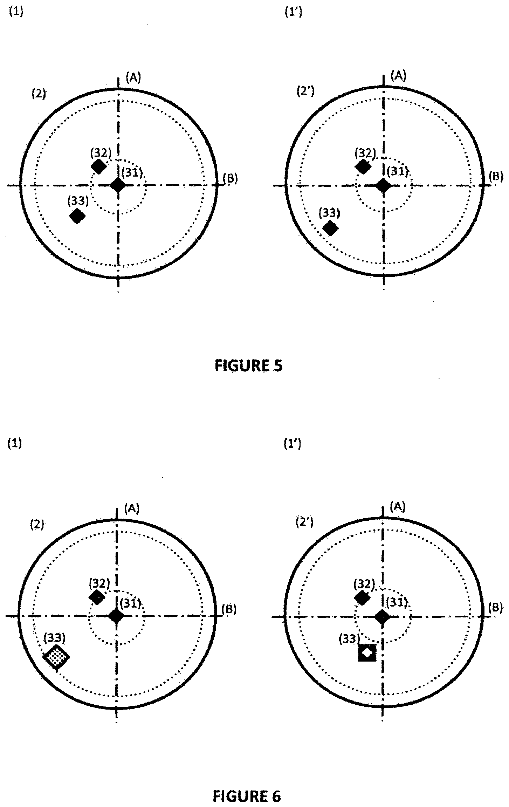

**Figure 5** represents a top view of two types of packages (1, 1') similar to the represented in the previous figures and being part of a system of edible products according to the present invention, including for example a system for preparing beverages by means of extraction of a precursor substance contained in the packages (1, 1') in a respective machine, as shall be described further below.

In the case of this embodiment, said packages (1, 1') present the same number of symbols (3) distributed to that at least one symbol (33) presents a different relative position with relation to the centre or to the surface perimeter of said exterior surface (2), so that they jointly configure a polygon of similar shape but different dimension.

In particular, according to a preferred embodiment, at least one of said symbols (31) presents a similar relative position in the exterior surfaces (2, 2') of said types of packages (1, 1'), and at least one of the symbols (33) presents a different relative position, including a different distance to the surface perimeter and a different angular position relative to central axis, in the exterior surfaces (2, 2') of said at least two types of packages (1, 1').

In particular, in the case of the represented embodiment, a symbol (33) presents a different radial distance, corresponding to a similar angular position, relative to at least one of the other symbols (31).

According to a particularly preferred embodiment, each increment of a previously defined dimension unit of said symbols (3) and/or of said polygonal shape, corresponds to a given letter or number, so that there can be herewith provided a simple and reliable code, based upon a relatively reduced number of symbols.

In the case of the embodiment represented in **Figure 6****,** the difference between the two types of packages (1, 1') is provided at least by a different relative position of at least one of the symbols (3), including a different angular position and distance relative to the centre or to the surface perimeter of respective exterior surface (2, 2'). Said symbols (3) thereby configure a different polygonal shape that can be recognized by automatic image processing means.

According to another preferred embodiment, at least one of the symbols (3) can further present a geometric shape contained inside so as to provide an additional differentiation between said types of packages (1, 1').

In the represented case, the first symbols of a first type of package (1) only presents one shape contour, whereas in a second type of package (1') it also presents a filling colour of different shape of the background colour of the exterior surface (2').

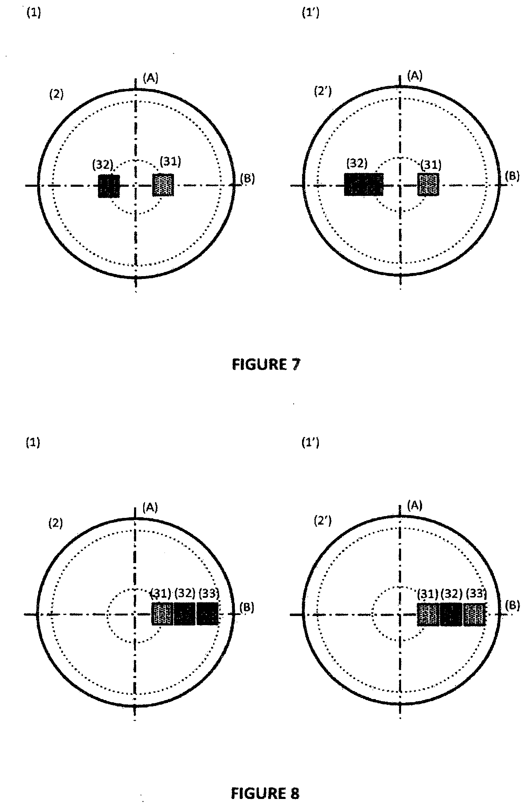

**Figure 7** represents an embodiment whereby at least one of said symbols (32) varies in its dimension along at least one direction, in this case along the radial direction.

The shape of the two symbols (31, 32) and distance relative to the surface perimeter of respective exterior surfaces (2, 2') can be recognized by automatic image processing means, as characteristic of a given type of packages (1, 1').

Moreover, according to another preferred embodiment, each of said symbols (31, 32) can be previously associated with a given information parameter. In particular, according to another preferred embodiment, the variation of dimension is previously defined in an incremental manner, so that to each incremental variation corresponds a given value for a given information parameter.

**Figure 8** represents an embodiment whereby said symbols (3) are provided substantially adjacent and along a radial direction, whereby at least two present different contrasts and/or colour. Each of the symbols (31, 32, 32) is in this case recognized by its shape and relative position in relation to the others.

According to a preferred embodiment, each symbol (31, 32, 33) is previously associated with a given information parameter. The variation of contrast and/or colour is previously defined in an incremental manner and/or quantified manner, so that to each incremental variation corresponds a given value for a given information parameter.

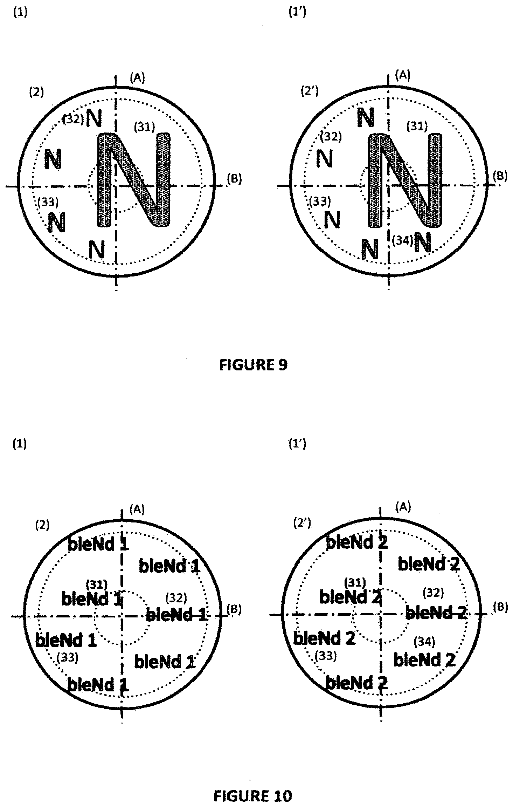

In the case of the embodiment represented in **Figure 9****,** said symbols (3) are alphanumeric symbols and the difference between the two types of package (1, 1') is at least provided by the different number of symbols (3).

According to a preferred embodiment, the difference of image provided by the exterior surfaces (2, 2') is further provided by the different relative position of the symbols (3) of different colour relative to the surface perimeter of the exterior surface (2, 2') and to a respective first symbol (31).

In the case of the embodiment represented in **Figure 10****,** said symbols (3) are also alphanumeric symbols and the difference between the two types of package (1, 1') is provided at least by the different number of symbols (3) that present a colour of filling different from the background colour of a respective exterior surface (2, 2').

Moreover, the difference of the image recognized by automatic image processing means is further provided by at least one different alphanumeric symbol comprised in said symbols (3).

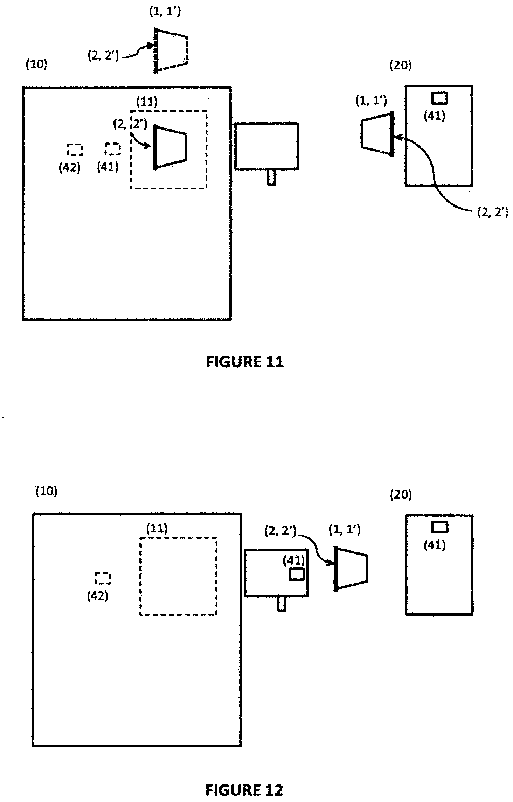

**Figures 11** and **12** represent preferred embodiments of systems for preparing edible products, in particular of aromatic beverages such as for example espresso coffee and similar, and that comprise at least one type of machine (10) for preparing edible products comprising at least one type of collection device (11) adapted for collection of the types of packages (1, 1'), at least one type of communications device (20), such as for example a mobile phone, in particular a communications device (20) provided so that can communicate with a control device of at least one type of machine (10), automatic image processing means comprising an image capture device (41), an image processing device (42) provided so that can operate an image processing software (not represented), adapted so that provide the recognition of at least one image parameter in at least one of the visible, infrared and ultraviolet spectra associated with said symbols (3) and to the distribution of said symbols (3) on an exterior surface (2, 2') of said types of package (1, 1').

According to a preferred embodiment, said image capture device (41) comprises a camera, preferentially a digital camera, a lens and, preferentially, a lighting device adapted so as to illuminate said exterior surface (2, 2').

In the case of the embodiment represented in Figure 11, said image capture device (41) is provided associated with said package collection device (11) so that said types of packages (1, 1') are recognized when inside thereof, whereas in the case of the embodiment represented in Figure 12, said image capture device (41) is provided associated to an exterior part of the machine (10), so that the different types of packages (1, 1') can be recognized in the exterior of said machine (10).

## Claims

1. **Package** (1) configured for collecting an edible substance, comprising at least one external surface (2) delimited by a respective surface perimeter and presenting a plurality of symbols (3),
**characterized**
**in that** at least two of said symbols (31, 32) are provided different in at least one image parameter and in the distance from respective centres to the centre of said external surface (2), are distributed in an uncentred configuration in relation to said external surface (2), and are adapted such that said differences can be optically recognized by automatic image processing means.

2. Package (1) according to claim 1, **characterized in that** said symbols (3) differ in at least one image parameter, preferentially in at least two image parameters, recognizable within at least one of visible, infrared and ultraviolet ranges, in particular from the group of image parameters that includes shape, dimension, contrast, reflection, colour, and
**in that** at least part of said symbols (3) are configured as regular shapes including of circular type, of polygonal type, and similar, and, optionally, some symbols (3) are provided as at least one of alphanumeric symbol, glyph, artistic drawing, or similar, and
**in that** said symbols (3) are adapted such that a previously defined variation of image parameter associated with a given symbol (3), for example by a given unit amount or property of said parameter, can be recognized by said automatic image processing means and associated to an information parameter previously associated with said symbol.

3. Package according to claims 1 to 2, **characterized in that** at least part of said symbols (3) is distributed regularly and/or irregularly un-clustered, at similar and/or different distances between each other, including in configurations of straight or curved alignment type, of polygonal type, of mesh type or similar, or similar, said configuration thereby preferentially presenting at least one of asymmetric position and asymmetric shape relative to the surface perimeter of said external surface (2), and
**in that** said distribution of symbols (3) is adapted such that a previously defined variation, for example by a given unit or property, of a dimensional parameter associated with said configuration, including at least one of shape, dimension, relative position and relative orientation of said configuration of symbols (3) in relation to said external surface (2), can be optically recognized by said automatic image processing means and associated to an information parameter previously associated with said configuration.

4. Package according to any one of previous claims 1 to 3, **characterized in that** at least three of said symbols (31, 32, 33) are provided along intersecting directions and at a different distance between each other so that said symbols (3) define a configuration of polygonal type, or similar.

5. Package according to any one of previous claims 1 a 4, **characterized in that** at least two, preferentially most of said symbols (3), or cluster of adjacent symbols (3), is provided in at least one of:
- at an angular distance, along any angular direction, of at least 80°, preferentially of at least 120°,
- provided so as to define an area corresponding to at most 50%, preferentially to at most 40% of the total area of said external surface (2),
so that there is required less image processing capacity by said automatic image processing means.

6. Package according to any one of previous claims 1 to 5, **characterized in that** said symbols (3) are distributed in at least one of:
- apart, at a linear distance between each other at least 50% bigger, preferentially 100% bigger than the biggest dimension of the smallest symbols (3);
- adjacent, along at least one radial direction, preferentially along at least two radial directions relative to the surface perimeter of said external surface (2).

7. Package according to any one of previous claims 1 to 6, **characterized in that** said distribution configuration is provided by at least two symbols (31, 32), preferentially by at least three symbols (31, 32, 33), and up to ten, preferentially up to fifteen symbols (3).

8. Package according to any one of previous claims 1 to 7, **characterized in that** at least one of said symbols (32) is provided at least partially inside of another symbol (31) or **in that** at least one of said symbols (32) corresponds to a punctual variation of the perimeter of another symbol (31).

9. Package according to any one of previous claims 1 to 8, **characterized in that** said symbols (3) present a shape contour and a shape filling of different colours, whereby at least one of shape contour and filling present a colour contrast ratio of at least 100:1, preferentially at least 200:1, relative to a respective background colour of said external surface (2).

10. Package according to any one of previous claims 1 to 9, **characterized in that** at least one first symbol (31) presents a bigger dimension, preferentially at least 20% bigger, particularly preferentially at least 40% bigger, than at least a second symbol (32), preferentially also than a third symbol (33).

11. Package according to any one of previous claims 1 to 10, **characterized in that** said symbols (3) present a shape that is symmetric relative to one respective central axis, preferentially relative to two respective central axis.

12. Package according to any one of previous claims 1 to 11, **characterized in that** said symbols (3) are provided in at least one of said central zone (21) and of said intercalary zone (22), preferentially not being provided at a peripheral zone (23) of a respective outside surface (2), so that the fraction of said external surface (2) whose image is to be recognized is smaller than 90%, preferentially smaller than 80% of the total area of said external surface (2).

13. **System** for distribution of edible products including at least two types of packages (1, 1') according to any one of claims 1 to 12,
**characterized**
**in that** said types of packages (1, 1') differ in at least one, preferentially in at least two of:
- image parameter including shape, dimension, contrast, colour, reflectance and relative position of at least one of respective symbols (31, 32);
- dimensional parameter of a configuration defined by the distribution of at least part of said symbols (3), including shape, dimension, relative position and relative orientation;
- at least one of type and number of symbols (3) that define said distribution configuration.

14. **Process** for distributing an edible product by means of using a package (1, 1'), in particular a package (1, 1') according to any of claims 1 to 12 and that is part of a system for distributing edible products, in particular of a system according to claim 13,
said process being **characterized in that** includes the steps:
- providing a package (1, 1') so that a respective external surface (2, 2') results in the field of observation of an image capture device (41);
- capturing, by means of said image capturing device (41), an image of said external surface (2, 2') including a plurality of symbols (3), preferentially at least an image of at least one of central zone (21) and intercalary zone (22) of said external surface (2);
- analysis of the captured image, preferentially by means of an image processing device (42),
whereby said analysis of captured image includes the characterization of at least one of:
- at least one image parameter associated at least with said symbols (3), preferentially also with a background thereof;
- at least one dimensional parameter associated with a configuration defined by the distribution of at least part of said symbols (3).

15. Process according to claim 14, **characterized in that** said captured image of an external surface (2, 2') corresponds to the fraction of area of said external surface (2, 2') that includes said symbols (3), whereby said fraction of area is smaller than 60%, preferentially smaller than 40%, particularly preferentially smaller than 30% of the total area of said external surface (2, 2').
